# EUROPÄISCHE PATENTSCHRIFT

(11) **EP 0 434 916 B1**
(45) Veröffentlichungstag und Bekanntmachung des Hinweises auf die Patenterteilung: **22.09.1993**
(21) Anmeldenummer: 90119434.0
(22) Anmeldetag: 10.10.1990
(51) Int. Cl.: B60B 33/02

(54) **Laufrolle**
Castor
Roulette à pivot

(30) Priorität: 23.12.1989 DE 8915173 U
(43) Veröffentlichungstag der Anmeldung: 03.07.1991
(73) Patentinhaber: TENTE-ROLLEN GmbH & Co., D-42929 Wermelskirchen (DE)
(72) Erfinder:
(74) Vertreter: Müller, Enno, Dipl.-Ing.

(56) Entgegenhaltungen:
- DE-A- 2 312 632
- GB-A- 984 065
- US-A- 4 184 227

## Beschreibung

Die Erfindung betrifft eine Laufrolle, insbesondere eine Lenkrolle, mit einem Laufrad und einer Feststellvorrichtung, welche Feststellvorrichtung ein Stellelement und ein mit diesem zusammenwirkendes Eingriffselement aufweist, zur Laufblockierung des Laufrades, wobei eine lineare Stellbewegung des Stellteils über ein Keilgetriebe auf das Eingriffselement übertragbar ist.

Eine derartige Laufrolle ist beispielsweise aus den eingetragenen Unterlagen des DE-U 75 23 557 bekannt. Bei dieser bekannten Laufrolle ist das Eingriffselement um eine Achse drehbar gelagert. Die lineare Stellbewegung des Stellteils wird in eine Drehbewegung des Eingriffselementes umgesetzt. Dies ist konstruktiv aufwendig. Auch ist insbesondere bei einem Zahneingriff zwischen dem Eingriffselement und dem Laufrad eine gewisse konstruktive Begrenzung durch die Kreisbewegung des Eingriffselementes zu beachten. Die kinematischen und konstruktiven Beschränkungen bei dieser Ausbildung werden insbesondere auch deutlich bei einer Anordnung des Eingriffselementes im Inneren des Laufrades, also bei Wirkung des Eingriffselementes auf eine Innenfläche des Laufrades.

Ausgehend von dem vorbeschriebenen Stand der Technik stellt sich der Erfindung die Aufgabe, eine Laufrolle, insbesondere Lenkrolle anzugeben, die bei konstruktiv möglichst einfacher Gestaltung und vorteilhafter Kinematik insbesondere auch für eine Anordnung im Inneren eines Laufrades geeignet ist.

Diese Aufgabe ist bei der im Anspruch 1 angegebenen Erfindung gelöst.

Erfindungsgemäß ist vorgesehen, daß das Eingriffselement für eine Linearbewegung geführt angeordnet ist, zur linearen Eingriffsbewegung in Bezug auf das Laufrad. Erfindungsgemäß ist ein Keilgetriebe zwischen dem Stellelement und dem Eingriffselement verwirklicht, welches die Linearbewegung des Stellelementes in eine Linearbewegung des Eingriffselementes umsetzt. Das Eingriffselement ist lediglich in einer Linearführung angeordnet, eine Drehachse bezüglich des Eingriffselementes kommt in Wegfall. Es versteht sich, daß die zusammenwirkenden Keilflächen des Stellelementes und des Eingriffselementes mit solchen Winkeln angeordnet sind, daß eine Selbstblockierung nicht auftritt. Im einzelnen ist dies weiter unten noch erläutert. Die Linearbewegung des Eingriffselementes erbringt eine zuverlässige Zusammenwirkung zwischen dem Laufrad und dem Eingriffselement. Bei einem Verschleiß der zugeordneten Fläche des Laufrades und/oder des Eingriffselementes bleibt gleichwohl der Ort und die Geometrie der Zusammenwirkung praktisch unverändert erhalten. In weiterer Ausgestaltung der Laufrolle ist vorgesehen, daß das Eingriffselement etwa rechtwinklig zu dem Stellteil angeordnet ist. Hierbei verlaufen die Achsen des Stellteils und des Eingriffselementes etwa in derselben Ebene und kreuzen sich entsprechend etwa rechtwinklig. Die Erfindung schlägt auch vor, daß das Eingriffselement auf eine Innenfläche des Laufrades wirkt. Hierzu ist das Stellteil, beispielsweise in an sich bekannter Weise durch einen Montagezapfen, bis in Höhe etwa einer Waagerechten (bei normaler Betriebsstellung des Laufrades), durch eine Drehachse des Laufrades gehende Ebene geführt. Das Eingriffselement ist bevorzugt etwa in dieser Ebene linear beweglich angeordnet. Hierdurch läßt sich auch in den begrenzten Einbauverhältnissen eine wirkungsvolle und zugleich konstruktiv und montagetechnisch vergleichsweise einfache Feststellvorrichtung ausbilden. Die Keilfläche des Stellteils ist bevorzugt als Glattfläche ausgebildet. Da das Laufrad weiter bevorzugt gleichzeitig um die Achse des Stellteils verschwenkbar ist, ist die glatte Keilfläche auf vollem Umfang ausgebildet. Die - nach unten weisende - Spitze ist abgeflacht. Dagegen ist die Zusammenwirkungs-Keilfläche des Eingriffselementes viertel- oder halbkreisförmig ausgebildet. Wie dies weiter unten noch im einzelnen erläutert ist, setzt sich hierbei bevorzugt die halbkreisförmige Keilfläche aus zwei Teilkeilflächen zusammen. Hinsichtlich der Keilwinkel ist bevorzugt vorgesehen, daß eine Keilfläche des Eingriffselementes mit einer Längsachse des Eingriffselementes einen Winkel von etwa 60° - 80° einschließt, bevorzugt ca. 70°, und daß eine Keilfläche des Stellteils mit einer Längsachse des Stellteils einen Winkel von ca. 20° - 40°, bevorzugt etwa 30°, einschließt. Darüber hinaus sieht die Erfindung vor, daß Eingriffsflächen des Eingriffselementes und des Laufrades verzahnt ausgebildet sind. Bei einer Anordnung im Inneren des Laufrades, wie bevorzugt vorgesehen, ist es entsprechend eine Innenfläche des Laufrades, die - über den gesamten Umfang - verzahnt ausgebildet ist. Die Zähne sind bevorzugt derart ausgebildet, daß die Zahnflanken zwischen sich einen Winkel von ca. 30° einschließen. In weiterer bevorzugter Ausgestaltung ist vorgesehen, daß die Laufrolle eine Zwillingsrolle ist, mit zwei Laufrädern. Hierbei ist das Eingriffselement an einem mittig zwischen den Laufrädern angeordneten Träger abgestützt und geführt. Das Eingriffselement kann zweiteilig ausgebildet sein, zur gegenseitigen Befestigung unter Einschluß des Trägers, an dem das Eingriffselement geführt ist. Das Eingriffselement selbst kann bevorzugt aus Aluminiumwerkstoff bestehen, während das Laufrad bzw. die zugehörige Eingriffsfläche des Laufrades aus Stahlwerkstoff bestehen kann.

Gegenstand der Erfindung ist auch eine Lenkrolle mit einer Schwenkblockierung. Hierbei ist es bereits bekannt, wozu beispielsweise auf die DE-A-35 21 794 verwiesen wird, drei verschiedene Stellungen vorzusehen, in denen zum einen eine Lauf- und Schwenkblockierung, des weiteren eine vollständige Freigabe und zum dritten lediglich eine Schwenkblockierung möglich ist. Um in der Stellung, in der lediglich eine Schwenkblockierung vorgesehen ist, eine Beschädigung der Laufrolle bei einer Überlast zu vermeiden, ist gemäß der Erfindung vorgesehen, daß die Schwenkblockierung als bei Überlast auslösende Rutschkupplung ausgebildet ist. Bevorzugt ist hierzu das Gegenlager entgegen einer Federkraft ausweichbar angeordnet. Das Richtungsblockierungsteil kann zylinderförmig ausgebildet sein und in dem Gegenlager kann hierzu eine halbzylinderförmige Ausformung ausgebildet sein, zur Aufnahme des Richtungsblockierungsteils. Bevorzugt ist hierbei weiter, daß die halbzylinderförmige Ausformung mit einer geringeren Tiefe ausgebildet ist, als es einem exakten Halbkreis bezüglich der Zylinderform (oder der Halbzylinderform des Richtungsblockierungsteils) entspricht. Hierdurch ergibt sich bei einer Überbeanspruchung die Möglichkeit des Herauswanderns des Richtungsblockierungsteils aus der Aufnahme in dem Gegenlager. Das Gegenlager ist des weiteren außerhalb der halbzylinderförmigen Ausformung mit einer im wesentlichen unstrukturierten Oberfläche ausgeformt. Wenn das Richtungsblockierungsteil aus der halbzylinderförmigen Ausformung durch eine Überlast herausgehoben ist, kann durch ein Zurückschwenken des Laufrades in die vorgegebene Schwenkblockierungsstellung die Rutschkupplung wieder einrasten. Im einzelnen ist weiter vorgesehen, daß das Gegenlager koaxial zu dem Stellteil angeordnet ist. Das Richtungsblockierungsteil kann als zylinderförmiger oder halbzylinderförmiger Vorsprung an dem Stellteil ausgebildet sein. Bei einer entsprechenden Anhebung oder Absenkung des Stellteiles greift das Richtungsblockierungsteil in das Gegenlager ein. Durch die Ausrichtung des Richtungsblockierungsteils ist die Schwenkblockierung des Laufrades richtungsmäßig vorgegeben. Durch die Federbeaufschlagung des Gegenlagers kann die Auslösekraft der Rutschkupplung eingestellt werden.

Nachstehend ist die Erfindung des weiteren anhand der beigefügten Zeichnung, die jedoch lediglich ein Ausführungsbeispiel darstellt, erläutert. Hierbei zeigt:
- Fig. 1: einen Querschnitt durch eine erfindungsgemäße, als Zwillingsrolle ausgebildete Laufrolle, in der Freigabestellung;
- Fig. 2: eine Darstellung gemäß Fig. 1, in der Laufrad- und Schwenkblockierungsstellung;
- Fig. 3: eine Darstellung gemäß Fig. 1, in der Schwenkblockierungsstellung;
- Fig. 4 und Fig. 5: eine stark vergrößerte Darstellung der Verzah nungsausbildung an dem Eingriffselement bzw. der Eingriffsfläche des Laufrades;
- Fig. 6: einen Schnitt durch den Gegenstand gemäß Fig. 1 entlang der Linie VI-VI in Fig. 1;
- Fig. 7 und Fig. 8: Detaildarstellungen der Rutschkupplung, die an der Schwenkblockierung ausgebildet ist;
- Fig. 9: eine Schnittdarstellung entlang der Linie IX-IX in Fig. 2;
- Fig. 10: eine perspektivische Einzeldarstellung eines Montagezapfens zusammen mit einem Trägerteil; und
- Fig. 11 und Fig. 12: perspektivische Einzeldarstellungen von Elementen des Eingriffselementes.

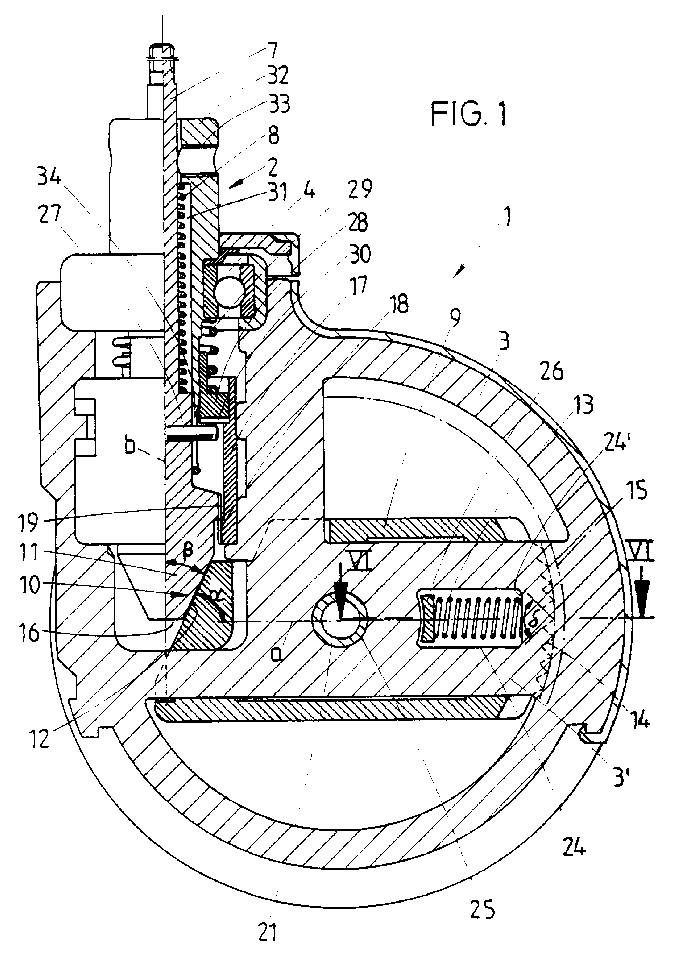

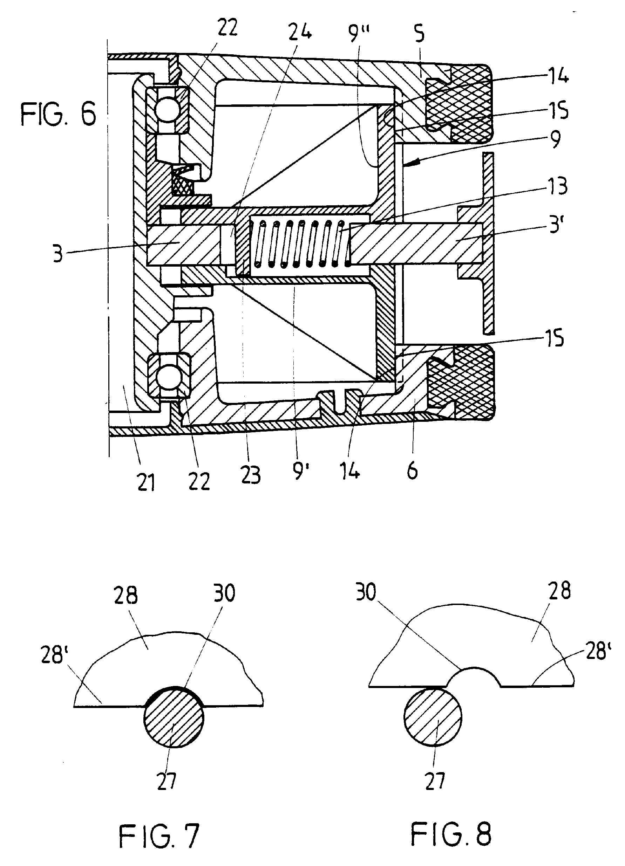

Dargestellt und beschrieben ist zunächst mit Bezug zu Fig. 1 eine als Zwillingsrolle ausgebildete Laufrolle 1 mit einem Montagezapfen 2 und einem Trägerteil 3. Der Montagezapfen 2 ist gegenüber dem Trägerteil 3 vermittels eines Kugellagers 4 schwenkbeweglich gelagert. An dem Trägerteil 3 sind des weiteren, wie sich im einzelnen aus Fig. 6 ergibt, die Laufräder 5 und 6 drehbeweglich gelagert.

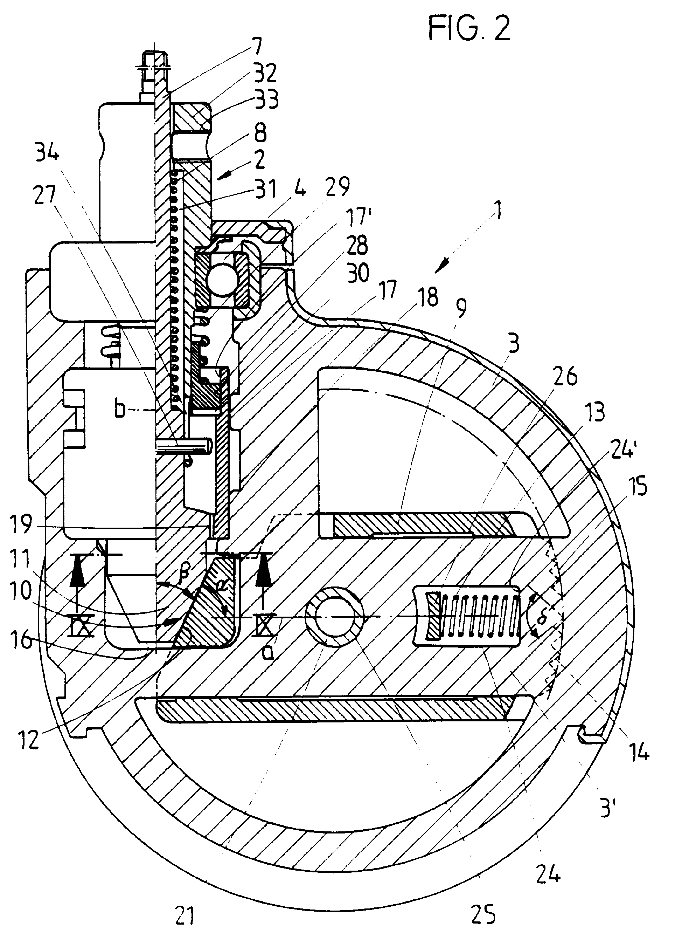

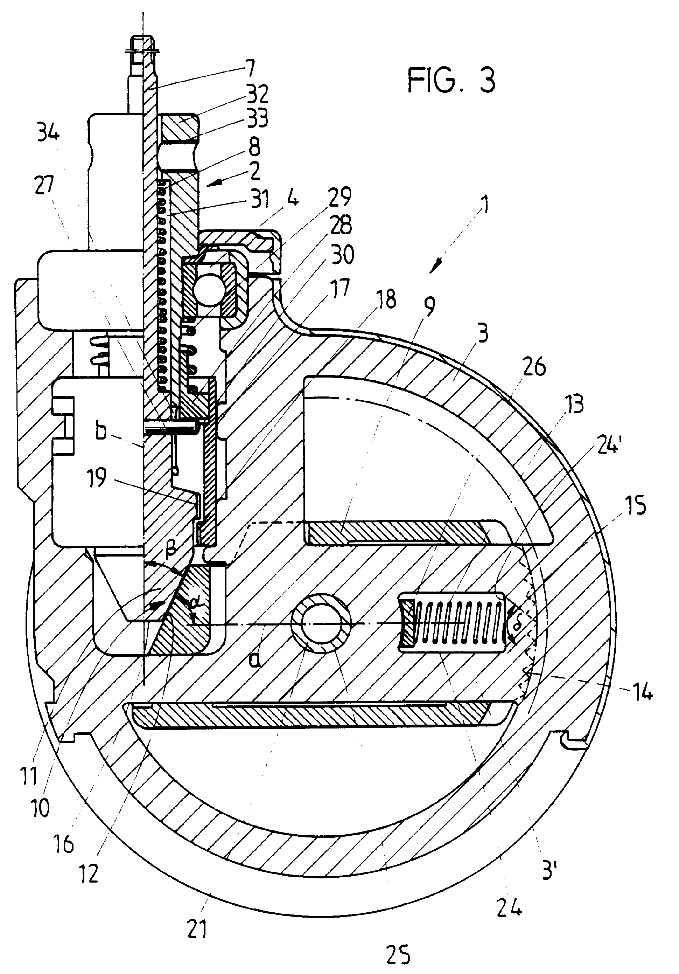

In dem Montagezapfen 2 ist ein Stellteil 7 angeordnet, das entgegen einer Federkraft aufgrund der Feder 8 aus einer Blockierungsstellung gemäß Fig. 2 zunächst in eine Freigabestellung gemäß Fig. 1 und sodann in eine Schwenkblockierungsstellung gemäß Fig. 3 versetzt werden kann.

In der Blockierungsstellung gemäß Fig. 1 wirkt das Stellteil 7 mit einem Eingriffselement 9 zusammen. Das Stellteil 7 wie auch das Eingriffselement 9 sind jeweils linear beweglich gelagert. Das Eingriffselement 9 und das Stellteil 7 wirken über ein Keilgetriebe 10 zusammen, welches Keilgetriebe im einzelnen Keilflächen 11, ausgebildet an dem Stellteil 7 und 12, ausgebildet an dem Eingriffselement 9, aufweist. Das Eingriffselement 9 ist durch eine an dem Trägerteil 3 abgestützte Feder 13 in die Freigabestellung vorgespannt. Bei dem Ausführungsbeispiel ist das Eingriffselement 9 etwa rechtwinklig zu dem Stellteil 7 angeordnet. Eine Eingriffsfläche 14 des Eingriffselementes 9 wirkt auf eine Innenfläche 15 eines Laufrades 5 bzw. 6. Die Eingriffsfläche 14 wie auch die Innenfläche 15 sind verzahnt ausgebildet. Die gewünschte Feststellung läßt sich aber auch durch eine Ausbildung der Flächen 14 und 15 ohne Verzahnung, vorteilhafterweise aber mit einem hohen Reibwert, erreichen.

Wesentlich ist bezüglich des Eingriffselementes 9, daß dieses in der Blockierstellung zwischen dem Stellteil 7 und dem Laufrad 5, 6 bzw. dessen Innenfläche 15, auf welche das Eingriffselement 9 wirkt, gefangen ist. Das Eingriffselement 9 kann nicht durch passive Kräfte, die etwa durch die Verzahnung oder eine sonstige Zusammenwirkung mit der Innenfläche 15 des Laufrades hervorgerufen werden, gelöst werden. Es ist eine Selbstblockade gegeben.

Die Blockierstellung gemäß Figur 2 wird durch einen Zug an dem Stellteil 7 gelöst. Soweit kein Zug vorhanden ist, wird die Blockierungsstellung durch die Federkraft der Feder 8 erreicht bzw. sichergestellt. Es versteht sich, daß die Federkraft der Feder 8 größer ist als diejenige der Feder 13.

Im übrigen können an den Eingriffflächen 14, 15 auch miteinander in Eingriff kommende Zähne vorgesehen sein, welche senkrechte Flanken bzw. radial zur Achse des Laufrades ausgerichtete Flanken aufweisen.

Die Keilflächen 11 und 12 sind im einzelnen so ausgebildet, daß die Keilfläche 12 mit einer Mittelachse a des Eingriffselementes 9 einen Winkel Alpha von ca. 70° einschließt, während die Keilfläche 11 mit einer Mittelachse b des Stellteils 7 einen Winkel Beta von etwa 30° einschließt. Es versteht sich, daß die Winkel der Keilflächen 11 und 12 in jedem Fall so gewählt sind, daß keine Selbsthemmung auftritt.

Die Keilfläche 11 ist darüber hinaus als im wesentlichen glatte Fläche, umlaufend ausgebildet. Der Keil ist an seiner Spitze 16 abgeflacht.

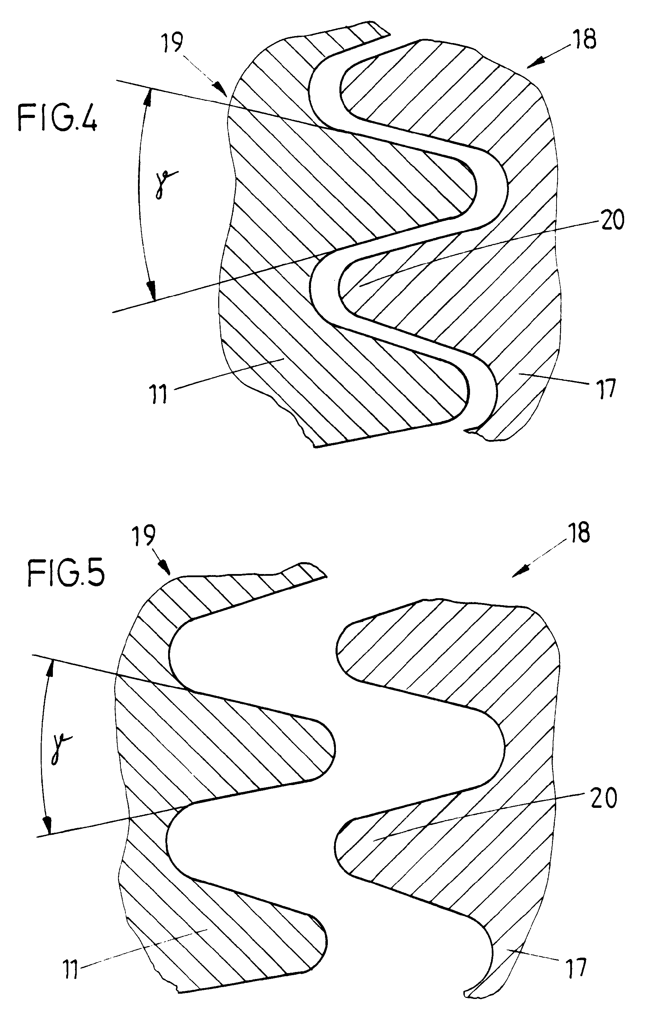

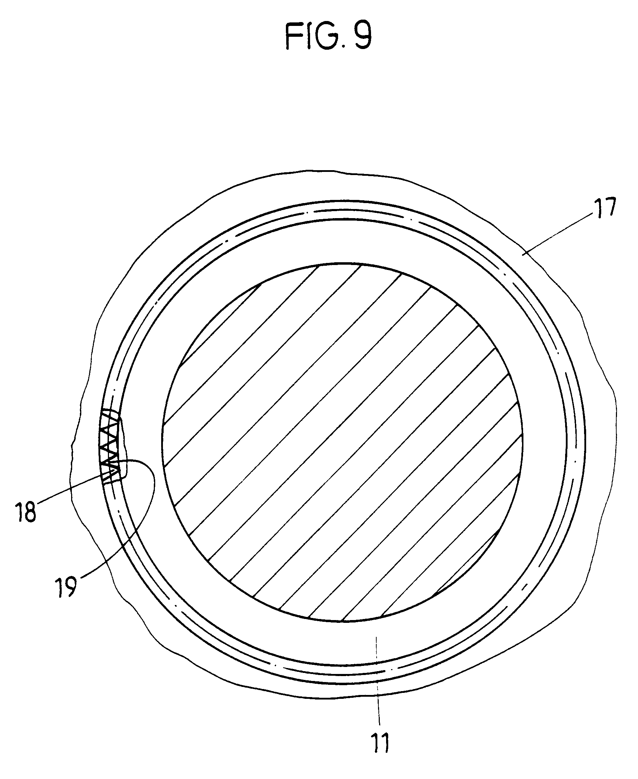

Die in den Fig. 4 und 5 dargestellte Verzahnung bezieht sich auf die Verzahnung im Bereich des Schnittes gemäß Fig. 9. Hier wirkt das Stellteil 7 mit einer mit dem Trägerteil 3 drehfest und lagefest verbundenen Hülse 17 zusammen. Diese Hülse 17 (vgl. auch Fig. 9) ist innenseitig mit einer Innenverzahnung 18 versehen, während das Stellteil 7 außenseitig in diesem Bereich mit einer Außenverzahnung 19 versehen ist. Die Innenverzahnung 18 bzw. die Außenverzahnung 19 ist mit Zähnen 20 ausgebildet, die zwischen den Zahnflanken einen Winkel Gamma von etwa 30° einschließen. Die Zähne 20 sind überdies mit einer Fußbreite von ca. 1 mm ausgebildet. Es sind etwa neunzig Zähne auf einem Umfang, also über 360°, vorgesehen.

Die Verzahnung an der Eingriffsfläche 14 bzw. der Innenfläche 15 ist mit im wesentlichen spitz zulaufenden Zähnen einer Höhe von ca. 1,5 mm und einer Zahnfußbreite von ca. 1,5 mm ausgebildet. Die Darstellung gemäß Fig. 6 stellt einen Querschnitt durch den Gegenstand gemäß Fig. 1 entlang der Linie VI-VI dar. Im Gegensatz zu der Darstellung gemäß Fig. 1 ist die Radachse 21 bei der Darstellung gemäß Fig. 6 als Hohlachse ausgebildet. Die beiden Räder 5 und 6 der Zwillingsrolle laufen jeweils abgestützt auf der Radachse 21 über ein Kugellager 22. Das Eingriffselement 9 ist doppelteilig ausgebildet, wobei das zweite Teil 9' beispielsweise bei 23 mit dem ersten Teil 9'' verschraubt sein kann. Hierzu ist in dem Trägerteil 3 ein Durchbruch 24 ausgebildet, in dem auch die Feder 13 abgestützt ist.

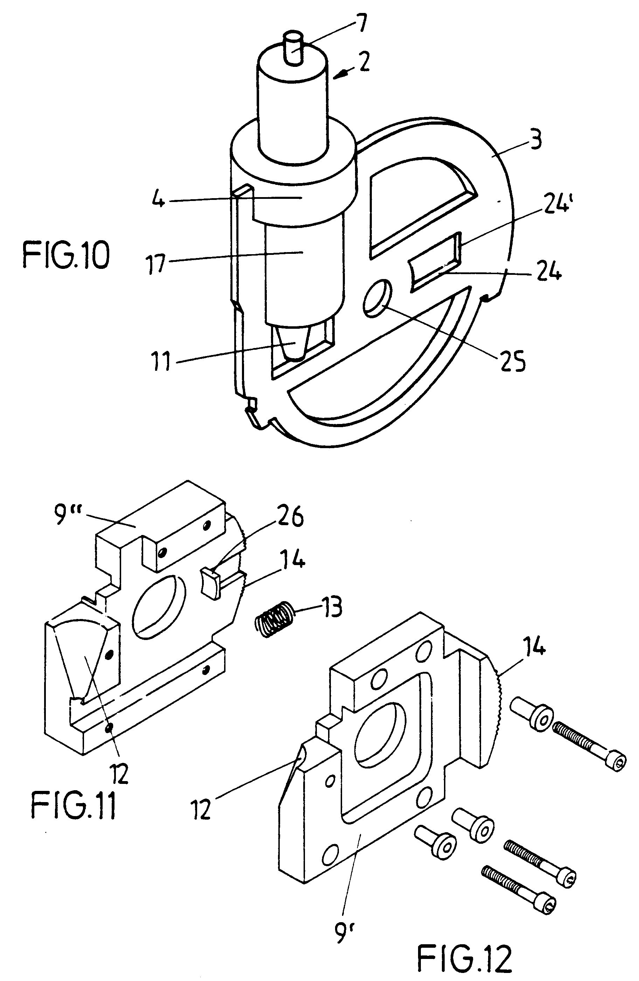

Der Aufbau des Trägerteils 3 zusammen mit dem Eingriffselement 9 und dem Montagezapfen 2, der das Stellteil 7 aufnimmt, ist des weiteren auch den Fig. 10 - 12 zu entnehmen. Es ist ersichtlich, daß in dem Trägerteil 3 eine Montageöffnung 25 ausgebildet ist, zur Aufnahme der Radachse 21. Weiterhin ist in Fig. 10 der Durchbruch 24 ersichtlich, durch welchen hindurch eine Verbindung der Teile 9' und 9'' des Eingriffselementes 9 durchführbar ist. Die Feder 13, die in Fig. 11 dargestellt ist, ist einerseits an der Seitenwand 24' des Durchbruches 24 und andererseits an dem Vorsprung 26 des ersten Teiles 9'' des Eingriffselementes 9 abgestützt.

Bezüglich des Montagezapfens 2 ist in Fig. 10 die Hülse 17 sichtbar, die fest mit dem Trägerteil 3 verbunden ist. Aus der Hülse 17 ragt unten ein Endbereich des Stellteils 7 mit der Keilfläche 11 heraus. Weiter ist schematisch das Kugellager 4 angedeutet.

Aus den Fig. 11 und 12 ist ersichtlich, daß das Eingriffselement 9 aus zwei Teilen aufgebaut ist. Vorzugsweise sind dies Teile aus einem geeigneten Kunststoff. Über einen Winkelbereich von ca. 30° - 40°, bezogen auf die verzahnte Innenfläche eines Laufrades 5 bzw. 6, ist an einem vorderen, der Keilfläche 12 abgewandten Ende des Eingriffselementes 9 eine Verzahnung ausgebildet. Die Keilfläche 12 setzt sich aus zwei viertelkreisabschnittsförmigen Kegelflächen zusammen, die jeweils an dem Teil 9'' bzw. 9' ausgebildet sind. Die Ausgestaltung des Eingriffselementes 9 gemäß den Fig. 11 und 12 weicht in Einzelheiten von der Ausgestaltung wie sie in den Fig. 1 - 3 und 6 dargestellt ist, ab. Wesentlich ist aber, daß die Teile 9' und 9'' im Einbauzustand miteinander verbunden sind und an dem Trägerteil 3 schienenartig geführt sind, wie beispielsweise aus Fig. 1 ersichtlich, indem sie in einem Vertikalschnitt den Mittelholm 3' oben und unten über- bzw. untergreifen. Ausgehend von dem Mittelabschnitt 3' erstreckt sich das Eingriffselement 9 jeweils seitlich, in einer Schnittdarstellung gemäß Fig. 6, um mit den Innenflächen der Laufräder 5 bzw. 6 zusammenzuwirken.

Wie weiterhin den Fig. 1 - 3 zu entnehmen ist, ist an dem Stellteil 7 ein Richtungsblockierungsteil 27 ausgebildet, das mit einem Gegenlager 28 zusammenwirkt. Das Gegenlager 28 ist in der Buchse 17 drehfest aufgenommen. Es ist jedoch in der Buchse 17 axial beweglich. Hierzu kann beispielsweise an der Innenfläche 17' und an der entsprechenden Außenfläche des Gegenlagers 28 eine Verzahnung vorgesehen sein, entsprechend der Verzahnung auf der Ebene des Schittes IX-IX. Auch kann die Aufnahme der Buchse 17 in diesem Bereich eckig ausgebildet sein, unter entsprechend angepaßter Ausbildung des Gegenlagers 28. Das Gegenlager 28 ist des weiteren mittels einer Feder 29 in die in Fig. 2 beispielsweise dargestellte Stellung beaufschlagt. Die Feder 29 stützt sich beim Ausführungsbeispiel an einem Innenring des Kugellagers 4 ab. An dem Gegenlager 28 ist unterseitig eine etwa halbzylindrische Ausnehmung 30 in Form einer Nut vorgesehen. In der vorgesehenen Richtung, gewöhnlich also in Geradeauslaufrichtung der Rolle, greift der Richtungsblockierungsvorsprung, der im übrigen, wie aus der Zeichnung ersichtlich, zylinderförmig ausgebildet ist, in die Ausnehmung 30 des Gegenlagers ein. Wenn sodann die Rolle hinsichtlich ihrer Ausrichtung einer Überbelastung unterworfen wird, kann das Richtungsblockierungsteil 27 aus dem Gegenlager 28, d. h. aus der halbzylinderförmigen Ausformung 30, herausfahren, da das Gegenlager 28 nach oben - bei dem Ausführungsbeispiel - ausweichen kann. Es ergibt sich die in den Fig. 7 und 8 schematisch darstellte Bewegung. In Fig. 7 ist das Richtungsblockierungsteil 27 in die Ausformung 30 eingefahren. In Fig. 8 ist das Richtungsblockierungsteil 27 unter Verdrängung des Gegenlagers 28 nach oben aus der Ausformung 30 ausgefahren. Das Richtungsblockierungsteil 27 liegt in dem Zustand gemäß Fig. 8 lediglich unter Federvorspannung auf der ebenen Unterfläche 28' des Gegenlager 28 an. Bei einer gegensinnigen Beanspruchung des Laufrades kann das Richtungsblockierungsteil 27 wieder in die Ausformung 30 einschnappen.

Im übrigen ist aus den Fig. 1 - 3 noch ersichtlich, daß das Stellteil 7 über die Feder 31 an der das Stellteil 7 koaxial umgebenden Buchse 32 abgestützt ist. Diese Buchse 32 besitzt eine mit Gewinde versehene Bohrung 33, zur Befestigung beispielsweise in einem aufnehmenden Rohrteil. Unterseitig formt die Buchse 32 einen Schlitz 34 aus, in welchem das Richtungsblockierungsteil 27 geführt ist.

Die in der vorstehenden Beschreibung, der Zeichnung und den Ansprüchen offenbarten Merkmale der Erfindung können sowohl einzeln, als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen vollinhaltlich mit einbezogen.

## Patentansprüche

1. Laufrolle (1), insbesonder Lenkrolle, mit einem Laufrad (5, 6) und einer Feststellvorrichtung, welche Feststellvorrichtung ein Stellelement (7) und mit diesem zusammenwirkendes Eingriffselement (9) aufweist, zur Laufblockierung des Laufrades (5, 6), wobei eine lineare Stellbewegung des Stellteiles (7) über ein Keilgetriebe (10) auf das Eingriffselement (9) übertragbar ist, dadurch gekennzeichnet, daß das Eingriffselement (9) für eine lineare Bewegung geführt angeordnet ist, zur linearen Eingriffsbewegung in Bezug auf das Laufrad (5, 6).

2. Laufrolle 1, insbesondere nach Anspruch 1, dadurch gekennzeichnet, daß das Eingriffselement (9) in einer Blockierungsstellung zwischen dem Stellteil (7) und dem Laufrad (Eingriffsfläche 15) gefangen ist.

3. Laufrolle (1), insbesondere nach einen oder mehreren der vorhergehenden Ansprüche, dadurch gekennzeichnet, daß das Eingriffselement (9) etwa rechtwinklig zu dem Stellteil (7) angeordnet ist.

4. Laufrolle (1), insbesondere nach einem oder mehreren der vorhergehenden Ansprüche, dadurch gekennzeichnet, daß das Eingriffselement (9) auf eine Innenfläche (15) des Laufrades (5, 6) wirkt.

5. Laufrolle (1), insbesondere nach einem oder mehreren der vorhergehenden Ansprüche, dadurch gekennzeichnet, daß eine Keilfläche (12) des Eingriffselementes (9) mit einer Längsachse (a) des Eingriffselementes (9) einen Winkel von etwa 60° bis 80° einschließt.

6. Laufrolle (1), insbesondere nach einem oder mehreren der vorhergehenden Ansprüche, dadurch gekennzeichnet, daß eine Keilfläche (11) des Stellteiles (7) mit einer Längsachse (b) des Stellteiles (7) einen Winkel von etwa 20° bis 40° einschließt.

7. Laufrolle (1), insbesondere nach einem oder mehreren der vorhergehenden Ansprüche, dadurch gekennzeichnet, daß eine Eingriffsfläche (14) des Eingriffselementes (9) und die Eingriffsfläche (15) des Laufrades (5, 6) verzahnt ausgebildet sind.

8. Laufrolle (1), insbesondere nach einem oder mehreren der vorhergehen Ansprüche, dadurch gekennzeichnet, daß die Zähne der Eigriffsflächen (15, 16) mit einem Winkel Delta zwischen den Zahnflanken von ca. 35° bis 45° ausgebildet sind.

9. Laufrolle mit einer Schwenkblockierung, insbesondere nach einem der Ansprüche 1 bis 7, wobei ein drehfestes Richtungsblockierungsteil (27) mit einem rollenfesten Gegenlager (30) zusammenwirkt, dadurch gekennzeichnet, daß die Schwenkblockierung als bei Überlast auslösende Rutschkupplung ausgebildet ist.

10. Laufrolle (1), insbesondere nach einem oder mehreren der vorhergehenden Ansprüche, dadurch gekennzeichent, daß das Gegenlager (30) entgegen einer Federkraft ausweichbar ausgebildet ist.

11. Lenkrolle, insbesondere nach einem der mehreren der vorhergehenden Ansprüche, dadurch gekennzeichnet, daß das Richtungsblockierungsteil (27) zylinderförmig ausgebildet ist und daß in dem Gegenlager (28) eine halbzylinderförmige Ausformung (30) ausgebildet ist, zur Ausnahme des Richtungsblockierungsteils (27).

12. Lenkrolle, insbesondere nach einem oder mehreren der vorhergehenden Ansprüche, dadurch gekennzeichnet, daß das Gegenlager (28) coaxial zu dem Stellteil (7) angeordnet ist.

## Claims

1. Roller (1), in particular castor, with a wheel (5, 6) and a locking device, which locking device comprises an adjusting element (7) and an engaging element (9) cooperating therewith, for locking the motion of the wheel (5, 6), wherein a linear adjusting movement of the adjusting portion (7) can be transmitted via a wedge mechanism (10) to the engaging element (9), characterised in that the engaging element (9) is guided for linear movement, for linear engaging movement relative to the wheel (5, 6).

2. Roller (1), in particular according to claim 1, characterised in that the engaging element (9) is caught in a locking position between the adjusting portion (7) and the wheel (engaging surface 15).

3. Roller (1), in particular according to one or more of the preceding claims, characterised in that the engaging element (9) is arranged approximately perpendicularly to the adjusting portion (7).

4. Roller (1), in particular according to one or more of the preceding claims, characterised in that the engaging element (9) acts on an inner surface (15) of the wheel (5, 6).

5. Roller (1), in particular according to one or more of the preceding claims, characterised in that a wedge surface (12) of the engaging element (9) forms with a longitudinal axis (a) of the engaging element (9) an angle of about 60° to 80°.

6. Roller (1), in particular according to one or more of the preceding claims, characterised in that a wedge surface (11) of the adjusting portion (7) forms with a longitudinal axis (b) of the adjusting portion (7) an angle of about 20° to 40°.

7. Roller (1), in particular according to one or more of the preceding claims, characterised in that an engaging surface (14) of the engaging element (9) and the engaging surface (15) of the wheel (5, 6) are toothed.

8. Roller (1), in particular according to one or more of the preceding claims, characterised in that the teeth of the engaging surfaces (15, 16) are constructed with a delta angle between the tooth flanks of about 35° to 45°.

9. Roller with pivot locking means, in particular according to any of claims 1 to 7, wherein a non-rotatable direction locking portion (27) cooperates with an abutment (30) fixed to the roller, characterised in that the pivot locking means is designed as a sliding coupling released in case of overload.

10. Roller (1), in particular according to one or more of the preceding claims, characterised in that the abutment (30) is capable of yielding against a spring force.

11. Castor, in particular according to one or more of the preceding claims, characterised in that the direction locking portion (27) is of cylindrical construction and in that in the abutment (28) is formed a semicylindrical recess (30), for receiving the direction locking portion (27).

12. Castor, in particular according to one or more of the preceding claims, characterised in that the abutment (28) is arranged coaxially with the adjusting portion (7).

## Revendications

1. Galet de roulement (1), en particulier galet orientable, muni d'une roue de roulement (5, 6) et d'un dispositif d'immobilisation qui comporte un organe de positionnement (7) ainsi qu'un organe d'engagement (9) coopérant avec ce dernier, afin de bloquer la rotation de la roue de roulement (5, 6), dans lequel un déplacement linéaire de positionnement de l'organe de positionnement (7) est susceptible d'être transmis à l'organe d'engagement (9) par une transmission à coin, caractérisé en ce que l'organe d'engagement (9) est monté en étant guidé pour effectuer un déplacement linéaire, afin de réaliser un déplacement linéaire d'engagement par rapport à la roue de roulement (5, 6).

2. Galet de roulement (1), en particulier selon la revendication 1, caractérisé en ce que l'organe d'engagement (9) est arrêté dans une position de blocage entre l'organe de positionnement (7) et la roue de roulement (surface d'engagement 15).

3. Galet de roulement (1), en particulier selon l'une ou plusieurs des revendications précédentes, caractérisé en ce que l'organe d'engagement (9) est disposé de façon sensiblement perpendiculaire par rapport à l'organe de positionnement (7).

4. Galet de roulement (1), en particulier selon l'une ou plusieurs des revendications précédentes, caractérisé en ce que l'organe d'engagement (9) agit sur une surface intérieure (15) de la roue de roulement (5, 6).

5. Galet de roulement (1), en particulier selon l'une ou plusieurs des revendications précédentes, caractérisé en ce qu'une surface de coin (12) de l'organe d'engagement (9) fait un angle d'environ 60° à 80° avec un axe longitudinal (a) de l'organe d'engagement (9).

6. Galet de roulement (1), en particulier selon l'une ou plusieurs des revendications précédentes, caractérisé en ce qu'une surface de coin (11) de l'organe de positionnement (7) fait un angle d'environ 20° à 40° avec un axe longitudinal (b) de l'organe de positionnement (7).

7. Galet de roulement (1), en particulier selon l'une ou plusieurs des revendications précédentes, caractérisé en ce qu'une surface d'engagement (14) de l'organe d'engagement (9) ainsi que la surface d'engagement (15) de la roue de roulement (5, 6) sont munies d'une denture.

8. Galet de roulement (1), en particulier selon l'une ou plusieurs des revendications précédentes, caractérisé en ce que les dents des surfaces d'engagement (15, 16) sont réalisées avec une angle delta d'environ 35° à 45° entre les flancs des dents.

9. Galet de roulement muni d'un système de blocage oscillant, en particulier selon l'une des revendications 1 à 7, dans lequel une partie de blocage d'orientation (27) immobilisée en rotation coopère avec une contre-butée (30) immobilisée en roulement, caractérisé en ce que le système de blocage oscillant est réalisé sous la forme d'un couplage patinant en cas de surcharge.

10. Galet de roulement (1), en particulier selon l'une ou plusieurs des revendications précédentes, caractérisé en ce que la contre-butée (30) est réalisée de manière à pouvoir fléchir à l'encontre d'une force élastique.

11. Galet de roulement, en particulier selon l'une ou plusieurs des revendications précédentes, caractérisé en ce que la partie de blocage d'orientation (27) présente une forme cylindrique, et en ce que dans la contre-butée (28) est prévue une déformation de forme semi-cylindrique (30), pour recevoir la partie de blocage d'orientation (27).

12. Galet de roulement, en particulier selon l'une ou plusieurs des revendications précédentes, caractérisé en ce que la contre-butée (28) est disposée coaxialement à l'organe de positionnement (7).
